# EUROPEAN PATENT APPLICATION

(11) **EP 0 827 098 A2**
(43) Date of publication of application: **04.03.1998**
(21) Application number: 97111940.9
(22) Date of filing: 14.07.1997
(51) Int. Cl.: G06F 17/60, G06F 17/30

(54) **Device independent and transfer optimized interactive client-server dialog system**

(30) Priority: 19.08.1996 EP 96113274
(71) Applicant: International Business Machines Corporation, Armonk, N.Y. 10504 (US)
(72) Inventor: Petrov, Tcvetan, 69118 Heidelberg (DE); Richstein, Hans-Jürgen, 68723 Schwetzingen (DE); Wittmann, Holger, 69221 Dossenheim (DE)
(74) Representative: Teufel, Fritz, Dipl.-Phys.

(57) **Abstract**

Disclosed is a mechanism to perform interactive applications in a client-server based interactive processing system, where these applications are presented at the client by way of documents.

It is proposed to describe the documents independent of the client's system resources for presentation of respective document pages, and to determine only substantial functional features for the page set up. In order to justice to all possible system resources for presentation of applications, the description of conversation is limited to only functional aspects like the minimum necessary user interaction devices which are required for running the application.

The real presentation set up is generated by a hardware specific resource management device (11) located at the client side (1) where the possible modes of interaction by a user are determined. Before transmission (3) of conversation-relevant information between the server (2) and the client (1), the documents are described by separating page set up information which is only used for set up of a page on the client side, and page information contents which is related to the user conversation. This page set up information can be provided on the client side before starting a real conversation, for instance by precaching that information on the client side.

The proposed mechanism and client-server architecture can be advantageously applied in the arena of mobile computing where a mobile client communicates with an application server over a wireless network, what allows a uniform application provided on a server system presentation of conversations at remote clients which comprise various different system resources for the presentation. Further changes for an application or amendments in an application have to be fulfilled only on the server side and not all clients.

## Description

The present invention partains to performing interactive applications in a client-server based interactive processing system, where these applications are presented at the client by way of documents enabling conversation with a user. In particular the invention is related to mobile computing where a mobile client communicates with an application server over a radio network.

In the arena of mobile network computing where portable computers like handhelds, laptops (notebooks), palmtops, or on-board computers like in automobiles, are used, communication links are held between a portable end-device (client) and a stationary application server over a wireless telecommuniation network. Hereby the following marginal conditions are involved.
1. The performance of the common client hardware does not surmount that of a Disk Operating System (DOS System) and thus the application software has to be compact with respect to the provided system resources. Beyond this, a communication platform is required for the communication with the server what has a further impact on the overall performance with respect to radio networks.
2. The display resources of currently used mobile computers vary strongly compared with desktop computers or workstations, and thereupon comprise relatively limited resources due to current technology in this area. Moreover those displays often comprise quite different display formats compared to each other.
3. Currently used mobile computers provide only very limited and strongly varying resources for user input/output of information. For instance, on-board computers used in the automobile industry often provide only a small number of simple to operate input keys. On the other hand, other devices are provided with full keyboards. Any deficiencies are balanced by emulation of a full value input device by driver software installed on the client side which is transparent to the applications.
4. Thereupon, the networks utilized for mobile computing are cost consumptive and provide only low transmission rates.

There exist generic approaches in the field of conversational communication between a host mainframe computer, like IBM's System/370, and peripheral Personal Computers (PCs). Specific driver software installed at each client enables a 3270 terminal emulation. Applivations provided in these systems are not aware of the client's capabilities for enabling interactive dialogs with one or more users. Display resources of these clients, in addition, are classified into a limited set of terminal classes. The minimum display size is 80X24 characters per line and per row with respect to one of those display classes. The provided applications are responsible for formatting dialog pages on the client side whereby they have to know the system resources for presentation of the application on the client's side and if necessary to configure the application respectively. Therefore that approach enables only uniform host communication (conversation) independent of the respective hardware platform provided on each client side.

Another generic field is the "Hypertext Transfer Protocol" (HTTP) communication protocol which, for example, is commonly used in the Internet. This protocol already allows use of different hardware platforms on the client sides, whereby utilizing only one unique protocol. But at first, the Internet is an information based system, and not a dialog based system, which provides only a pool of information which can be browsed by a so-called "Web Browser". At second, the interactive provisions of these Browsers are very restricted and concentrate only on the browsing mechanism and up- and downloading of information. Moreover, the nescessary system resources for implementation of these Browsers are considerably over-sized with respect to mobile computer systems.

Beyond the beforehand approaches, in the present field of mobile computing, existing portable computers work with locally installed software and thus inherently work with restricted performance. Particulary each change of application software has to be fulfilled on each of the clients what causes additional costs and failing times during a change-over, and needs also time for temporary testing procedures.

The object of the present invention is therefore to provide a method and a system which avoid the prementioned drawbacks of existing solutions and allow a device-independent and transfer-optimized conversation in a client-server information handling system. Further the invention should enable that changes or amendments of applications provided on a server only have to be accomplished on the server side.

The invention solves the above objectives by providing a mechanism for handling conversational dialogs in a generic client-server based information handling system according to claim 1, a respective dialog system architecture according to claim 13, and a particular terminal device which can be used on the client side to enable multimedia presentations which are independent of the respective underlying client's hardware. In particular the client's terminal device can provide self-configuration with respect to an application with specific hardware requirements.

The underlying concept of the invention is to describe documents for interactive conversation independent of the client's system resources for presentation of the respective (document) pages, and to determine only substantial functional features for the page set up. In order to justice to all possible system resources for presentation of applications, the description of conversation (dialog and expected responses) is limited to only functional aspects like the minimum necessary user interaction devices (buttons etc.) which are required for running a definite application.

The real presentation set up is generated by a hardware specific resource management device located at the client side where the possible modes of interaction by a user, for instance via a keyboard, a touchscreen, or software emulated buttons, are determined. This device can be further responsible for the presentation of abstract functional multimedia elements on the client side. In a preferred embodiment, this management device is implemented as a resource adaptation software layer provided between the network and the client's presentation device (e.g. display). An application has just to utilize a number of feedback mechanisms which can be implemented by the respective presenting client.

Before transmission of conversation-relevant information between the server and the client, the documents are described by separating page set up information which is only used for set up of a page on the client side and not for an actual user conversation itself, and page information contents which is related to user conversation with an application and transmitted at later stages of conversation. This page set up information can be provided on the client side before starting a real conversation, for instance by (pre-)caching that information on the client side.

The invention therefore allows an application provided on a server system presentation of conversations at remote clients which comprise various different system resources for the presentation. Further changes for an application or amendments in an application have to be fulfilled only on the server side and not all clients.

Further the aforementioned drawbacks of underlying communication networks are taken into account by the proposed caching mechanism (intelligent caching) and by efficient protocols which guarantee reduction of the transmitted information to a minimum, and thus enhance performance and rentability of mobile computing. Hereby partial components of a document are cached on the client side. For this, preferably a static cache for caching document information which is preloaded and not changed over the time of running an application, and a dynamic cache for caching information being collected during runtime of the application, are provided. These two cache memories can be controlled by a cache manager.

With regard to object-oriented technology, the page set up information can be advantageously represented by functional objects and presentation objects wherein the functional objects can be defined independently of a client presentation hardware platform. Due to the proposed architecture, adaptation of a document to a specific client's hardware can be accomplished automatically and transparent to the user.

In a further embodiment of the invention, particular objects for multimedia presentation of a document are provided which are related for instance to voice, button, screen set-up, etc. Abstract multimedia functional elements can be further provided to enable a multimedia presentation which automatically adapts to in the first place unknown multimedia resources of a client.

A presentation of a document (page) is not restricted to a page visible on a computer display. Moreover there are no limitations for an implementation of multimedia components like sound, motion pictures, etc.

The transmitted information stream can be further compressed and expanded in order to minimize the bandwidth requirements for the transmission. Bi-directional information flow between the server and a client can be advantageously provided in order to enable transmission of specific information needed on the server side for running an application like server accesses due to user queries on the client side. For example, a client can inform the server about its system resources for presenting multimedia presentation objects.

The proposed mechanism and architecture can be advantageously implemented by using expansible boxes which are independent of the respective display format of a client and which can be automatically adapted to that format whereby maintaining the relative dimensions of the boxes to each other. Each box can include a multimedia presentation object, wherein the meaning of an expansible box depends on the respective server and is determined by the respective application. In a preferred embodiment of the invention, these boxes are provided at successive lines of a document.

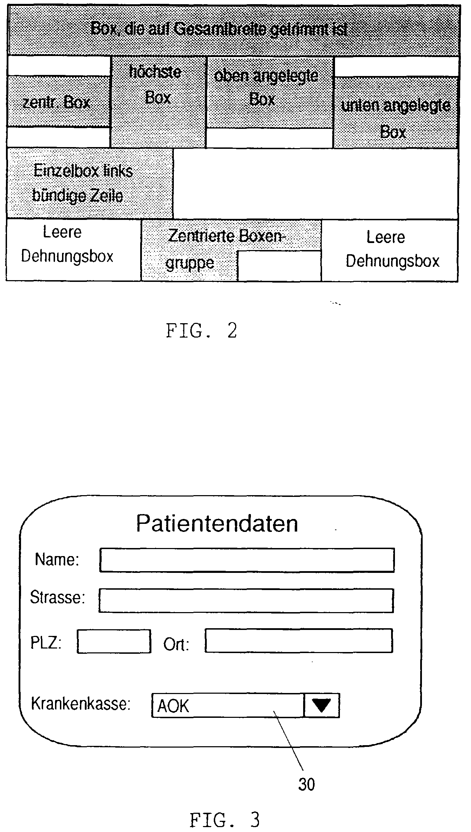

Dialog masks presented on the client's side often comprise input arrays where, in contrast to an intermediate transmission of a whole document from the client to the server, only a small portion of the dialog mask has to be updated. For instance, in case of the medical application depicted in Fig. 3, clicking on the bottom field 30 in the array causes appearing of a list of health insurance companies where one of these companies can be selected for a further stage of the dialog. This is accomplished by use of so-called "auto-send fields" which are sent from the client to the server without any interaction by the user.

These and other objects, features and advantages of the invention will be more appreciated with reference to the accompanying drawings where
Fig. 1 is a block diagram depicting a preferred architecture according to the invention where a mobile client is connected to a stationary application server;
Fig. 2 shows an exemplary visual (document) page set up based on expansible boxes;
Fig. 3 shows an exemplary conversation in the field of medical patient information handling; and
Fig. 4a and b are two snapshots of the same application dialog presented on two clients which provide different system resources for presentation of the respective dialog masks.

### Client-Server Architecture

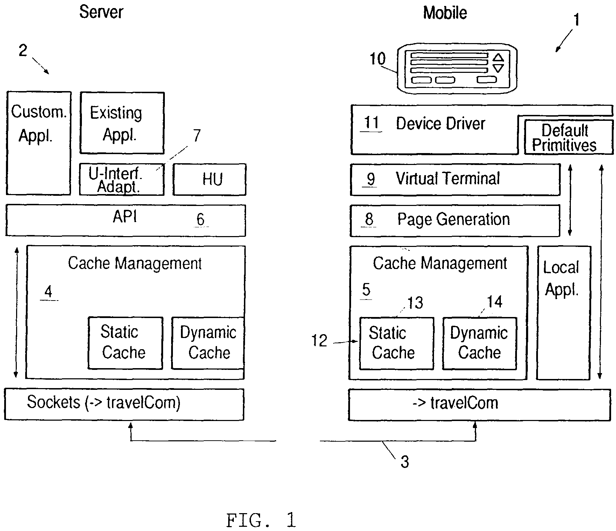

By way of a block diagram, Fig. 1 shows a preferred architecture of a client-server system where a mobile client 1 is communicating with a stationary server 2 which can be any server suitable computer system. It is further presumed that the server and the client are interconnected via a wireless network 3. Hereby it is noteworthy that the invention is not restricted to radio networks, moreover telecommunication networks like the Integrated Switching Digital Network (ISDN) or other wide area networks (WANs) or local area networks (LANs) as the Internet or private Intranets are eligible, or even infrared (IR) light controlled communication networks as provided in most of the common stores.

Running an application involves information exchange between the server and the client with respect to the presentation of the application on the client side, in particular its conversational presentation. This information can be divided into information related to the set up of the presentation and information exchanged by user interactions which can be regarded as information contents of a document. Those information streams pass through cache management modules 4, 5 which are provided on the server 2 and the client side 1. For any cached information, only a reference information has to be transmitted. The only exception for information which does not have to traverse the cache management modules 4, 5, is basic control and command (query) information exchanged between the server 2 and the client 1.

Further provided is an Application Program Interface (API) 6 by which all kinds of applications can be run on the server, either by direct utilization of the API, or by insertion of an adaptation layer 7 which can be used, for example, for a Host-PC communication.

The transferred information stream is advantageously reduced with respect to already cached information on the client side 1. Over a wireless radio transmission line 3 the information stream is transferred to the mobile client 1. The cache management module 5 on the client side 1 expands the stream again to the original shape. In case of document contents information, the expanded stream is interpreted by a page generation module 8 and forwarded to a virtual terminal module 9. The virtual terminal module builds up a real (document) page based on the abstract and functional description of the page, which is presented on the existing client's hardware 10 by means of a hardware dependent device driver unit 11.

In this embodiment, the device driver unit 11 - in addition - provides a number of presentation primitives by which additional notifications can be presented by the client's terminal, which are presented independent of the virtual terminal module 9, like caution signals, telemetry data, etc. Hereby feasible local applications provided by the client, for instance applications for querying of telemetry data like engine data of an automobile, or global positioning system (GPS) data, can be handled. These data can also be presented by means of the presentation primitives of the device-dependent driver unit 11.

### Document Description

According to the invention, description of a document, i.e. set-up and the information contents, is performed abstract and device independent with regard to the respective presentation resources of a client. A concrete physical meaning of a document is provided at first when presenting it, for instance as page, on a client's terminal device 10. The appearance of the presentation can vary with the presentation capabilities of the respective client. However, the fundamental elements and therefore the functionality of a document survive due to the abstract description.

There exist a number of embodiments for generating a document according to the proposed mechanism. In a first embodiment generation can be accomplished in a pure textual form by means of a formal description language. In another embodiment it is realized by construction of the page elements by means of respective API functions. Hereby the respective data structures required for internal representation of a document are generated explicitly within the program code of the application, while the description is converted to the internal page presentation by the formal language by means of a parser.

In the above embodiment, documents are subdivided into a static portion which corresponds to a dialog mask used to control the retention or elimination of portions of a pattern of characters corresponding to a conversational dialog between an application and a user, and a second dynamic portion corresponding to the contents of input- and output fields of a document or actual selections of fields by a user. Before the transmission, both portions are laid down in only one document, but are separately handled in the transmission phase. For a static portion of a document already being provided (i.e. cached 12) on the client side 1, only the according dynamic information is transmitted to the client which is inserted in an existing mask.

In this embodiment, a document is described by a number of superimposed lines. Each line consists of at least one side by side disposed boxes which are automatically expanding to the provided presentation format and which correspond to at least one shaping element like output information (e.g. text) or an input field. The height of a line is determined by the largest included box. The boxes within a line can be centered with respect to that maximum line height, or can be presented at the top or bottom of a line.

Boxes 20 presented within a line 20 are ranged side by side, but can also be expanded to the maximum width of the widest line, at least however the maximum physical width format of the respective client's presentation device. This is illustrated with reference to Fig. 2, where the overall width is determined by the width of the second line 22. The box 20 presented in the first line is expanded relatively to that width. By way of placing dummy (empty) expansible boxes 23 in front of or appending to presented functional boxes, it can be achieved that functional boxes are presented in a centered or right-aligned position. Each AUTO_FILL (expansible) box gets an equal percentage of the left free space with respect to the total number of existing AUTO_FILL boxes in the same line (row), thus allowing arbitrary, yet device independent positioning of a box.

In addition, a box must not only contain functional elements, it thereupon can contain a number of lines, or another logical page. Hereby any kind of recursive nesting is possible. Thus documents can be arbitrarily designed without impact on the intended system resource independency.

The actual physical size of a (document) page generated by the above description language concept is exclusively determined by the presenting device on the client side. Therefore, from an application's point of view, absolute presentation sizes can not be regarded. Only the character width or the number of lines used for input and output fields can be determined within distinct limitations. But the final size depends on the used character set.

Each expansible box represents the frame for one or more individual functional elements of a described document. Conversations can be designed by just combining these elements. The according elements of the above preferred embodiment are depicted in Table 1 which insofar is only exemplary as all kinds of multimedia components are involved which can be supported by the respective client's hardware. By specifying a field width of "AUTO_FILL", the respective expansible box is broadened so that the whole line width is extended to the width of the broadest line, but at least to the physical width of the presenting display. In case more than one field containing this parameter, all these boxes are expanded proportional. The 'auto-activation' attributes for the input field and the 1 of n selection field means that any selection or input verification is treated as activation of a button i.e. an according message is sent to the server. A formal description language for an implementation of these functions is presented hereinbelow.

Each field element comprises a number of attributes wherein parts of these attributes are equal for all field types, and others are specific for each field or a number of fields. Fields for which no width and/or height are determined, the respective box size is calculated from the presented field content. In case of a pre-determined width and/or height of a field, for instance as multiple of a standard character line of the chosen character set, an eventually spacious presentation is - dependent on the field type - cut, broken down, or manually scrolled into a visible portion of the presentation space.

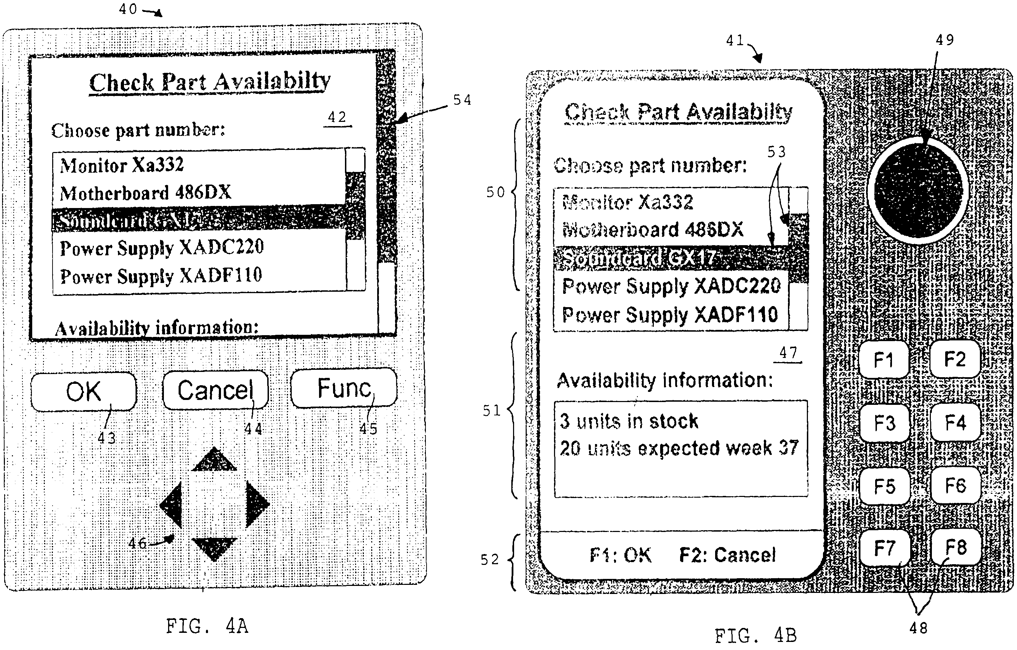

In Fig. 4a and 4b display presentations of an application dialog mask on two different client's terminal devices 40, 41 are shown, these clients having different system resources for presentation of documents. The device in Fig. 4a comprises a display area 42, three function keys 43, 44, 45 for the actions "OK", "Cancel" and "Func", and arrow keys 46 for display navigation. On the display a current snapshot of an application dialog window is shown.

In contrast to this, the terminal device depicted in Fig. 4b comprises a display 47 of different shape and size, and - instead of the function keys 43, 44, 45 and the arrow keys 46 - eight function keys ("F1-F8") 48, and a trackball 49 for display navigation.

As can be seen from Fig. 4b, the application window 47 consists of an upper portion 50 which contains a number of computer parts like a monitor type, a motherboard type or a type of a soundcard. In a further window portion 51, for each item in the upper window 50 the available background information is displayed. An item can be selected by pushing the "F1" button, or cancelled by pressing the "F2" button, as the user is informed at the bottom part 52 of the display. The user can scroll through the upper display window by means of the trackball 49 wherein the actual item is highlighted by means of a cursor bar connected to a scroll bar (slider) 53. It is emphasized that in case of the terminal device 41 of Fig. 4b, the required interactive means ("OK" and "Cancel" functions) are mapped to the physical existing function keys 48 whereby the mapping is also displayed on the screen 47 in the additional information line 52 at the bottom of the display 47.

The display area 42 of the device 40 shown in Fig. 4a in particular has a smaller size compared with the display 47 shown in Fig. 4b. As a consequence, a further slider 54 is displayed on the right side of the display 42, since the current page needs more vertical space than physically provided by the client's terminal 40.

### Page Description Language

In the following, a formal description language is described by which the above functionality can be implemented. By this formal language conversational dialogs and interactive features can be advantageously described. An exemplary dialog shown in Fig. 3 can be described according to the following pseudo code:

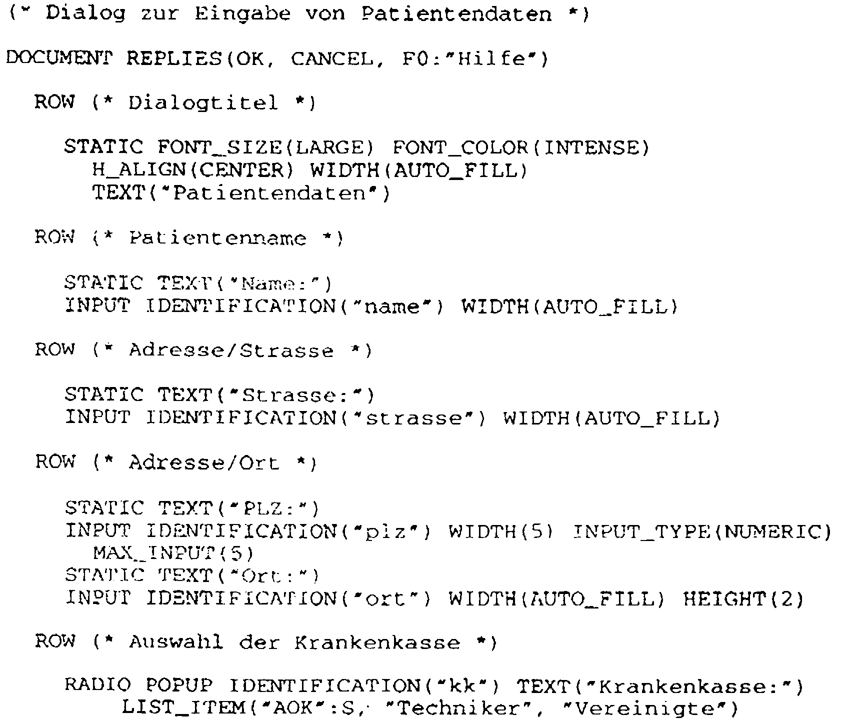

The exemplary document is configured for the return of standard responses "OK", "CANCEL", and "F0" of a user. The presentation of these responses on the client's terminal depends on the respective hardware resources. In case the client's hardware provides appropriate functional elements for these functions, e.g. according functional keys of a keyboard, no additional elements have to be presented on the client's display. On the other hand, if the client does not provide such keys, the respective functions can be presented on the client's display.

A formal language for describing a document is shown in the following. Hereby basic data types are mentioned only for clearness purposes.

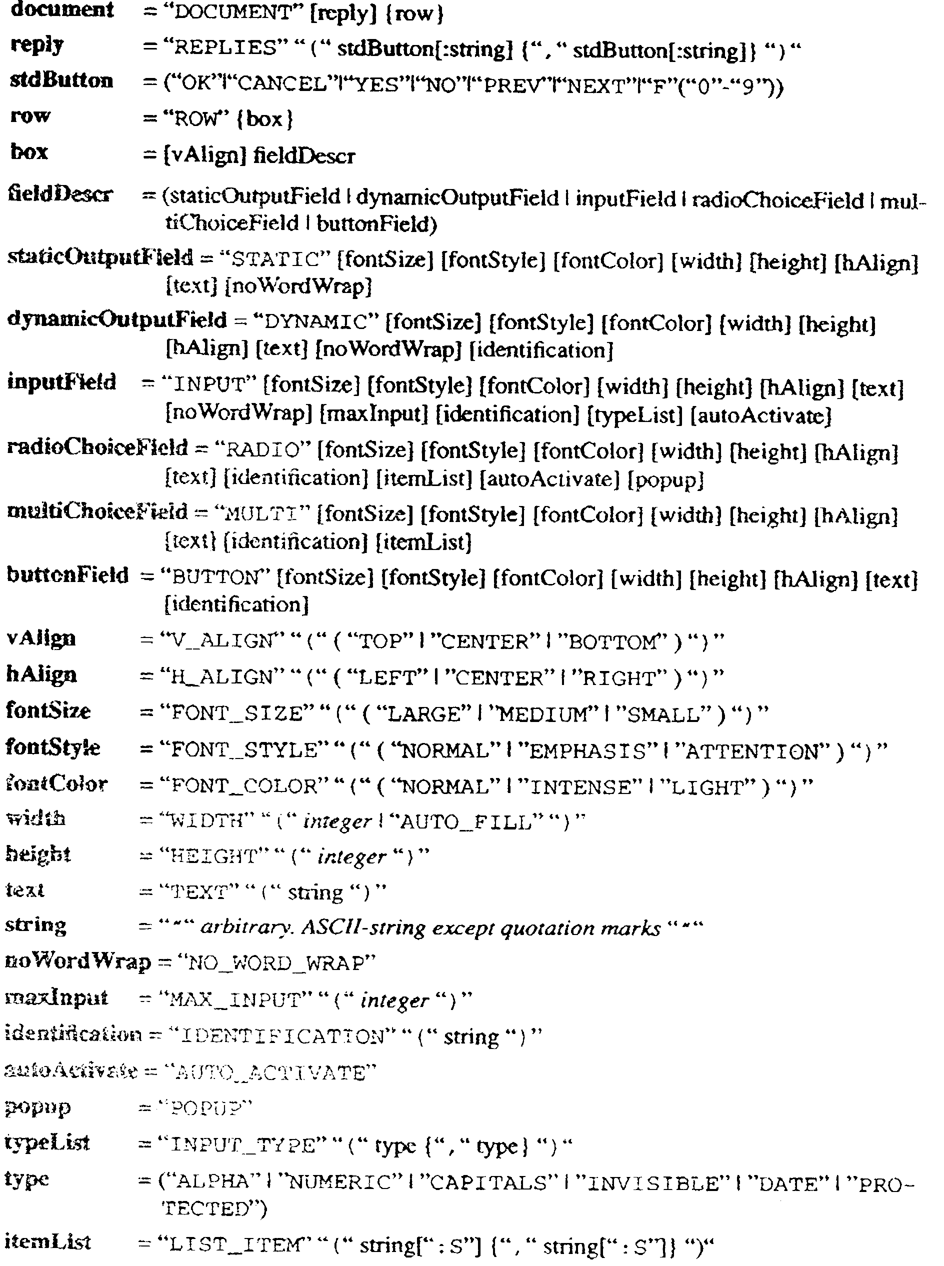

### Application Program Interface

For the generation of documents for an application, the following application program interface (API) can be advantageously used. With respect to the hereinbefore discussed limitations, it consists of only a few elementary functions which are sufficient for generation of all required structures.

The internal representation of a document remains obscure to a user. The document stores the static portion of the transmitted information stream (dialog mask) as well as the dynamically changing information which is used as predetermined text or as explanatory comments for input fields, for defining dynamic output fields, or for user selections in selection fields. Those dynamic data exist only in the generation phase of an information stream which is going to be transmitted and are discarded thereafter. Hereby it is avoided that, after attaching of other dynamic information, previous data are transmitted again. By use of the API the dynamic portion of a document can be amended at any time and transferred to the client independent of the respective static portion (dialog mask).

The transmitted information stream can be enlarged by control commands and query commands, or further dynamic data, and the complete information packet can be transferred 'en bloc' to the client.

The following excerpt of a program code written in C-language depicts generation of the exemplary conversation (dialog) shown in Fig. 3. The respective attribut names consist of the allowed description language parameters which are extended by the prefix "TT_".

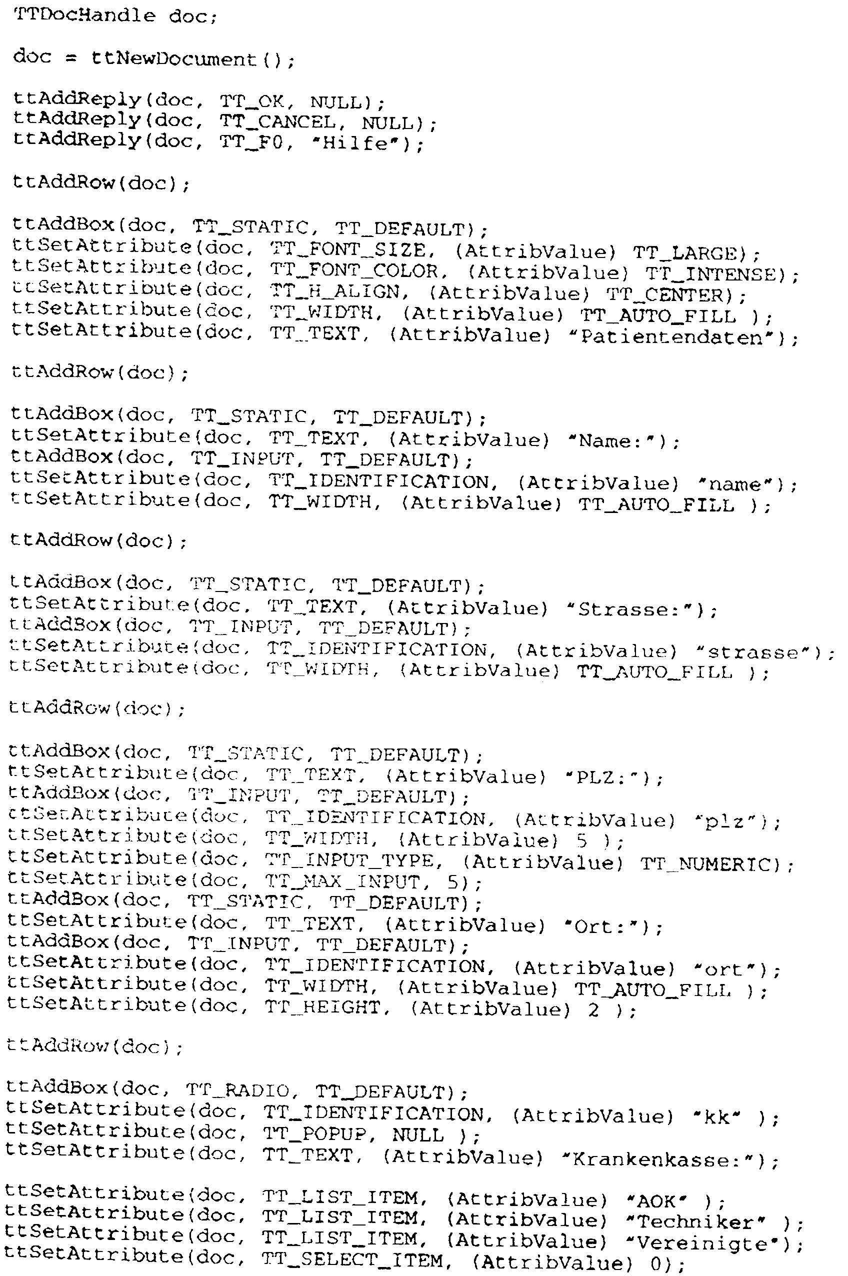

In the following the functions by the API are listed. the possible return codes can be gathered from the respective comments of the API header files designated "tt_api.h".
TTDocHandle ttNewDocument(void)
   This function is used for generation of a new empty document. The returned handle must be denominated for all operations on that document. (In contrast to a "pointer", a "handle" is an abstract reference (term) to an object.)
int ttFreeDocument(TTDocHandle handle)
   For each document internally a number of resources will be allocated. In case of that document not needed any longer, these resources can be completely released again by this function.
int ttFreeDynamic(TTDocHandle handle)
   This function releases all dynamic data of a document and will be performed automatically when the dynamic part of a document has been inserted in an information stream by a function "ttAddDyn2DataStream".
TTDocHandle ttParseDocument(char *string)
   When a TTDL document is provided in a null-terminated buffer (C-string), it can be converted into a document handle by means of this function. After a successful conversion, this function delivers a document handle.
char *ttLastParseError(void)
   This function delivers a pointer to a string which specifies the respective last error during scanning or parsing a document.
TTDocHandle ttReadDocument(char *filename)
   When a TTDL format is provided by a text file, it can be converted by this function into the internal format. After successful read and conversion a document handle is returned.
int ttWriteDocument(TTDocHandle handle, char *filename)
   By way of this function, a document provided by the document handle can be written into a file as TTDL text document.
int ttAddReply(TTDocHandle handle, int button, char *modifier)
   Herewith a standard response button can be determined for a document. If no modified title is required, a respective 'null' pointer must be denominated.
int ttAddRow(TTDocHandle handle)
   This function appends a new empty line to a document.
int ttAddBox(TTDocHandle handle, int fieldType, int v_align)
   This function inserts a new box right-aligned into an actual line of a document. If no specific vertical adjustment of the box is desired, as default value "TT_DEFAULT" must be denominated. Furthermore the type of the contained functional element, i.e. "TT_STATIC", "TT_DYNAMIC", "TT_INPUT", "TT_RADIO", "TT_MULTI", or "TT_BUTTON", must be declared.
int ttSetAttribute(TTDocHandle handle, int attrib_type, AttribValue Value)
   By this function all attributes of a functional element of an actual, at last created or with "ttSetCurrentBox" set box can be determined.
int ttSetCurrentBox(TTDocHandle handle, char 'id)
   Hereby a box with an identification "id" can be set actual, and thus further operations like "ttSetAttribute" relate to that box. This function can only be applied to boxes for which a respective identification attribute has been defined in the construction phase of the box.
TTDataStreamHandle ttOpenDataStream(void)
   By this function a data stream according to the invention can be established. Afterwards, this information stream can be filled up with arbitrary documents, or dynamic control and query data, and then transmitted.
void ttCloseDataStream(TTDataStreamHandle ttds)
   A no more required data stream can be released by delivering its handle together with associated resources to this function.
int ttAddDoc2DataStream(TTDataStreamHandle ttds, TTDocHandle doc)
   The static and dynamic portion of a delivered document hereby can be inserted into a given data stream. Afterwards, the dynamic information of the document is discarded.
int ttAddDyn2DataStream(TTDataStreamHandle ttds, TTDocHandle doc)
   The dynamic portion of a delivered document can be inserted into a given data stream by way of this function. The dynamic information is discarded afterwards as beforehand. In case of changes of the dynamic data in a document which shall be transmitted separately to the client in order to insert them into an actual document, these dynamic data even will be the only portion comprised by the data stream.

In Table 2 the possible parameters for the function "ttSetAttribute" are depicted in more detail.

### Coding of a Data Stream

By the generation of an information stream the data are coded in order to get an as compact as possible transmission packet. All data with a word length greater than 1 byte are buffered in a "Network Byte Order", i.e. the most significant bytes (MSB) of a word are provided at a lower address. For positive integer numbers the data type "Packed Unsigned Integer" (PUINT) is used, i.e. 7 bits of a byte are used for the value of a number and the MSB being set means that another byte is following.

The structure of such a data stream is illustrated in the following by a notation similar to the hereinbefore shown code examples. Any comments are set into brackets and presented cursive at the respective end of a line.

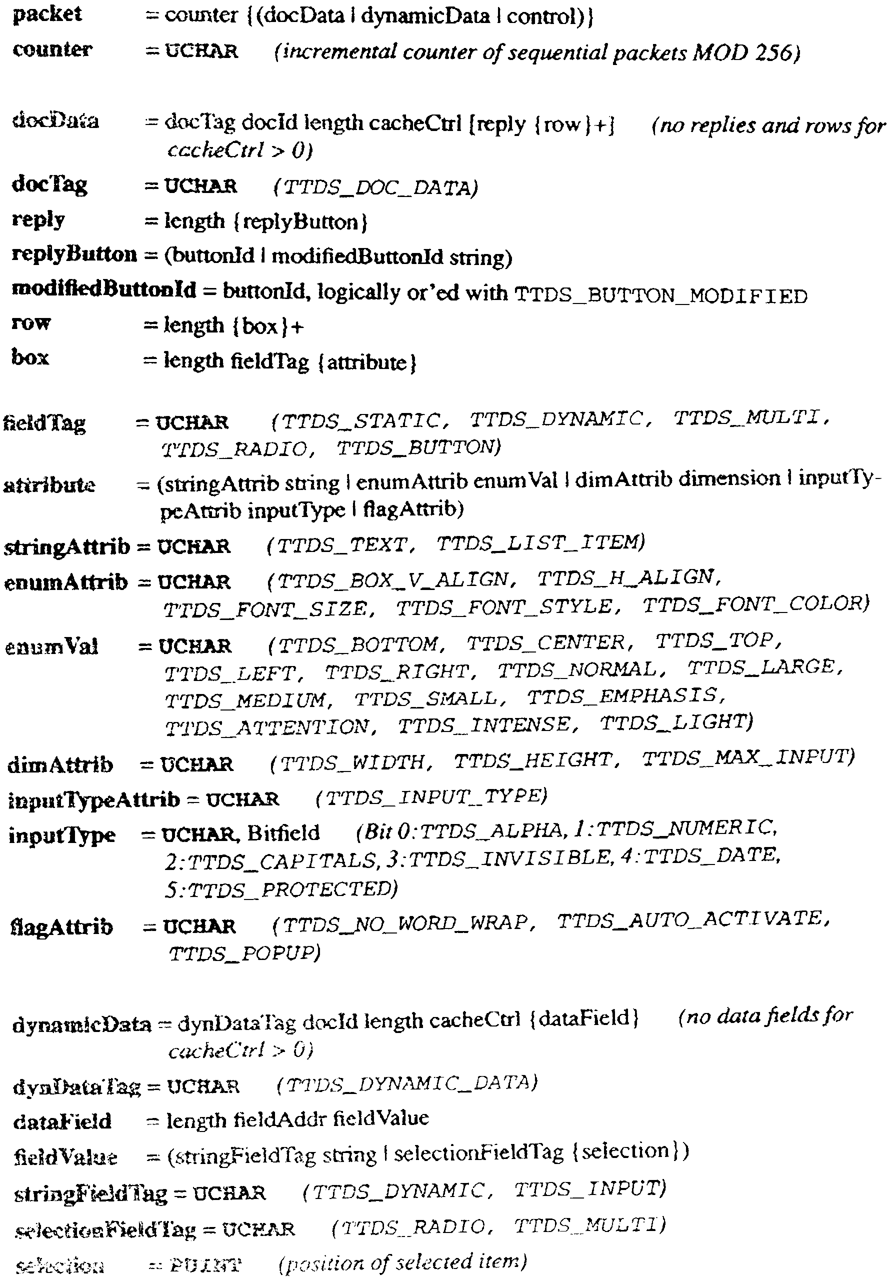

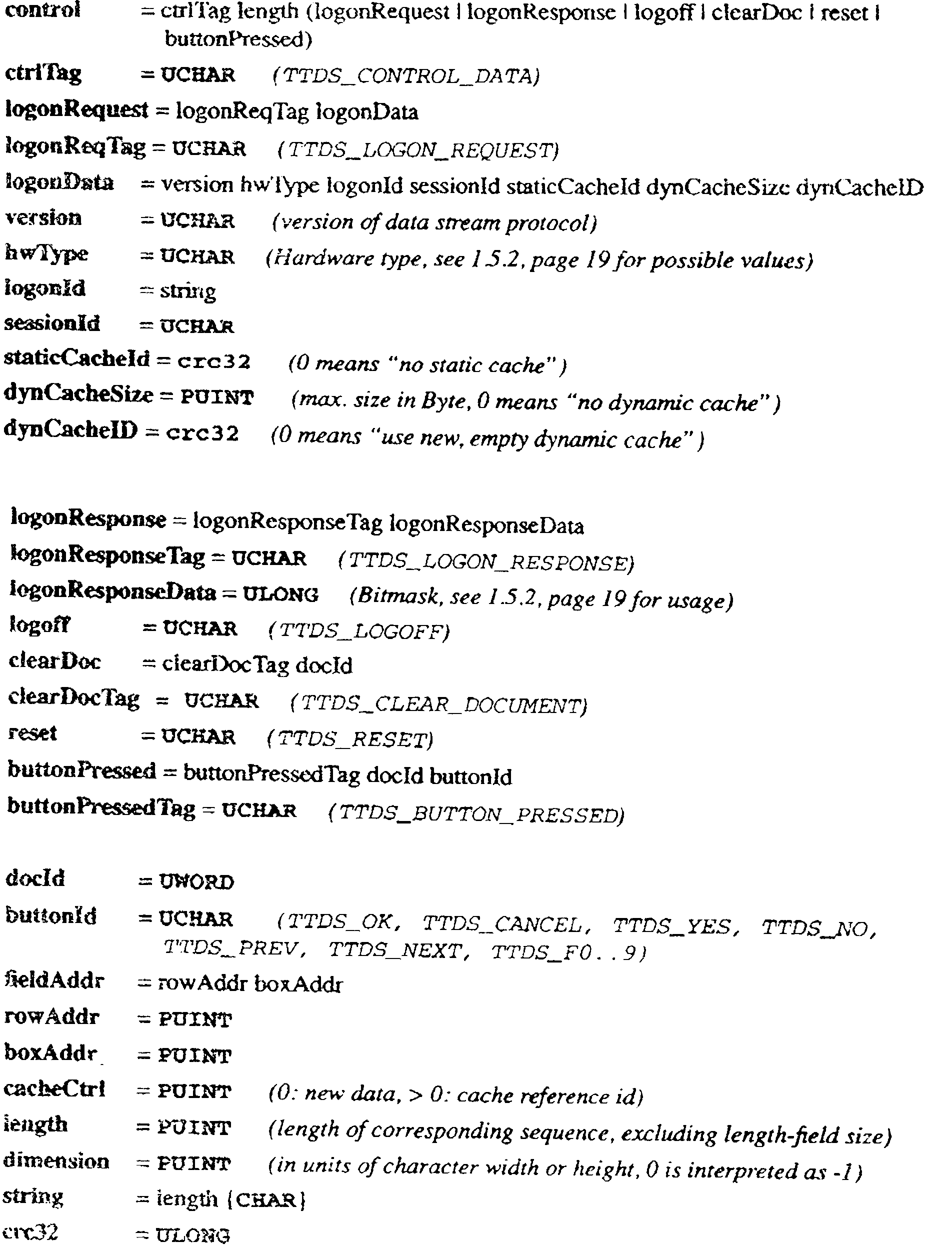

### Caching mechanism

Already in the design phase of a document, the information stream is subdivided into a static and a dynamic portion. These distinct data are handled in two separate blocks which are cached independently of each other. Thus, for instance, dialog masks can be provided entirely on the client side 1 in a static (preloaded) cache memory 13, whereby only the information contents of the masks are transferred respectively.

The caching of transferred information is accomplished transparently to the user during transmission of a first information stream, although he can influence the cache performance by the selection of individual data blocks in the during the generation phase of a data stream.

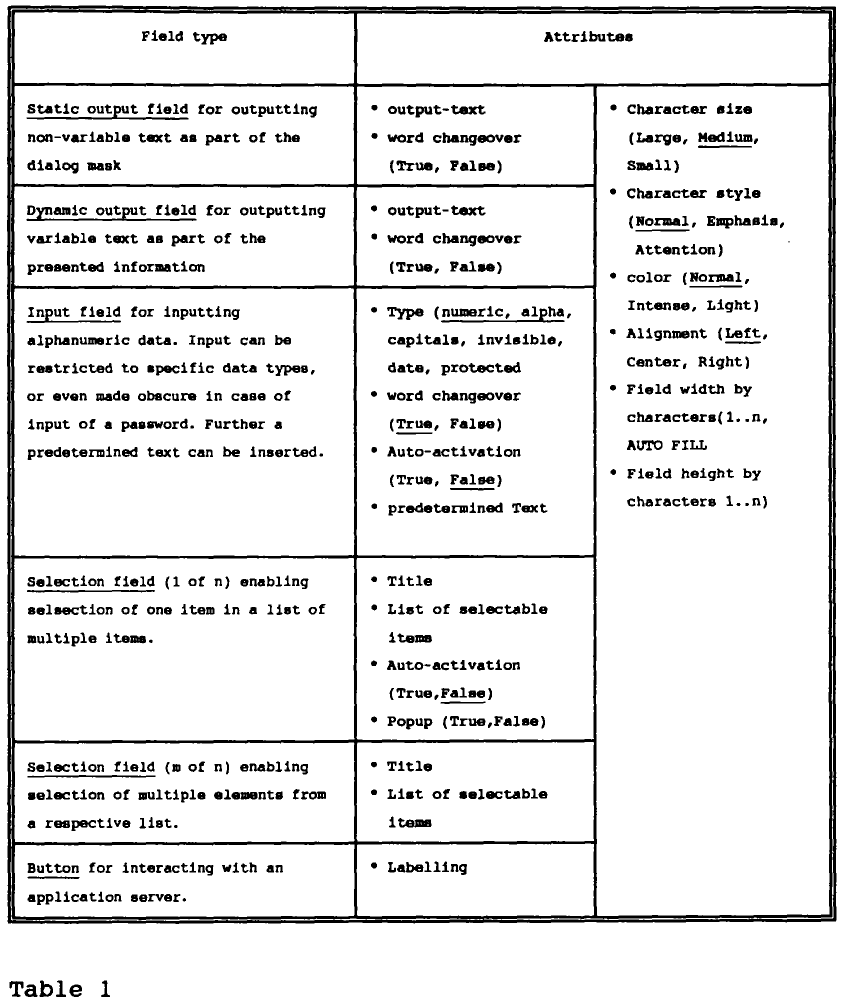

**Table 2**

| Attribute type | Attribute value | Valid elements |
|---|---|---|
| TT_IDENTIFICATION | pointer to string | all |
| TT_FONT_SIZE | TT_LARGE,TT_MEDIUM, TT_SMALL | all |
| TT_FONT_STYLE | TT_NORMAL, TT_EMPHASIS, TT_ATTENTION | all |
| TT_FONT_COLOR | TT_NORMAL,TT_LIGHT, TT_INTENSE | all |
| TT_WIDTH | TT_FILL_WIDTH, 1..n | all |
| TT_HEIGHT | 1...n | all |
| TT_TEXT | pointer to string | all |
| TT_MAX_INPUT | 1..n | |
| TT_NO_WORD_WRAP | unused | Static, Input, Dynamic |
| TT_POPUP | unused | Radio |
| TT_AUTO_ACTIVATE | unused | Radio, Input |
| TT_LIST_ITEM | pointer to string | Radio, Multi |
| TT_INPUT_TYPE | TT_ALPHA, TT_NUMERIC, TT_CAPITALS, TT_INVISIBLE, TT_DATE, TT_PROTECTED | Input |
| TT_SELECT_ITEM | 0...#items-1 | Radio |
| TT_SELECT_ITEM | TT_NO_SELECTION, 0...*items-1 | Multi |

## Claims

1. Method for performing interactive applications in a client-server based dialog system, said applications utilizing documents (20 - 23) for interaction with a client (1), and said client providing system resources (10, 40, 41) for running said applications and for presenting said documents, the method being characterized by the steps:
describing on the server side (2) said documents with respect to the page set up (Fig. 2) and to the page information contents, and generating document information which is independent of said system resources;
transmitting (3) said document information from the server to the client;
generating (8) on the client side a document with respect to said transmitted document information, said document being independent of said system resources;
generating (11) on the client side a document page with respect to said system resources; and
presenting (10) said document page on the client side.

2. Method according to claim 1, wherein mapping said document page set up onto the system resources of the client with respect to the functional requirements of the respective application.

3. Method according to claim 1 or 2, wherein said page set up information being represented by functional objects and presentation objects.

4. Method according to any of the preceding claims, wherein providing system resource adaptation means for automatically adapting and configuring the system resources of the client with respect to the actual system resource requirements of a document page presented by the client.

5. Method according to claim 3 or 4, wherein transmitting said presentation objects together with information related to the interactive requirements of a document.

6. Method according to claim 5, wherein caching (4, 5, 12 - 14) a document on the client and/or the server side.

7. Method according to any of the preceding claims, wherein reducing an information stream before transmission and expanding the information stream after the transmission.

8. Method according to any of the preceding claims, wherein bidirectionally transmitting user action information between the server and the client.

9. Method according to any of the preceding claims, wherein transmitting from the server to the client conversation interaction statements for specifying possible interactions by a user on the client side.

10. Method according to any of the preceding claims, wherein describing a document by at least one expansible box (20 - 23) which represents a multimedia presentation object, and presenting said document page information contents within said expansible boxes.

11. Method according to claim 10, wherein describing said document by a number of successive lines (21, 22) where each line consists of at least one expansible box.

12. Method according to any of the preceding claims, wherein providing auto-send objects which are transmitted automatically from the client to the server on activation.

13. Client-server dialog system for performing interactive applications which provide documents (Fig. 2) for interaction with a client (1), where said client provides system resources (10) for running said applications and for presenting said documents, the dialog system being characterized by:
means (6) on the server side (2) for generating document information related to the page set up and to the page information contents which is independent of said system resources;
means (3) for transmitting said document information from the server to the client;
page generation means (8) on the client side (1) for generating a document page with respect to said page set up information and with respect to said transmitted document information;
resource management means (11) on the client side for adapting the page set up of said document page to said system resources with respect to said transmitted document information;
means (10) on the client side for presenting said document page.

14. Dialog system according to claim 13, comprising:
static cache means (13) for caching document information which is preloaded and unchangable during runtime of an application;
dynamic cache means (14) for caching information which is collected during said runtime;
cache management means (4, 5) for controlling said static and dynamic cache means.

15. Dialog system according to claim 13 or 14, further comprising virtual terminal means (9) for mapping a document page on said system resources, said document page being generated by said page generation means (8).

16. Dialog system according to any of claims 13 to 15, further comprising means for compressing and expanding said transmitted information stream.

17. Dialog system according to any of claims 13 to 16, where the client further comprises presentation means for presenting abstract multimedia functional elements (presentation primitives) for said conversation.

18. Dialog system according to any of claims 13 to 17, comprising system resource adaptation means for automatically adapting and configuring the system resources of the client with respect to the actual system resource requirements of a document page presented by the client.

19. Terminal device for presenting interactive applications in a client-server dialog system based on documents (20 - 23), according to any of the preceding claims, where presentation of a document is independent of the respective system resources (10) of said terminal device, the terminal device being characerized by
page generation means (8) for generating a document page with respect to receiving document information;
virtual terminal means (9) for providing virtual document page information comprising a page set up as described by the respective application;
resource management means (11) for generating a document page with respect to said provided virtual document page information and to said received document information.

20. Terminal device according to claim 19, wherein said virtual terminal means mapping said virtual document page information onto said system resources.

21. Terminal device according to claim 19 or 20, further comprising
static cache means (13) for caching document information which is preloaded and unchangable during runtime of an application;
dynamic cache means (14) for caching information which is collected during said runtime;
cache management means (4, 5) for controlling said static and dynamic cache means.
